Europäisches Patentamt

European Patent Office

Office européen des brevets

(11) Publication number: **0 301 509 B1**

# EUROPEAN PATENT SPECIFICATION

(45) Date of publication of patent specification: **19.04.95** (51) Int. Cl.⁶: **C08K 3/24**, C08K 3/26, C08L 23/02

(21) Application number: **88112139.6**

(22) Date of filing: **27.07.88**

The file contains technical information submitted after the application was filed and not included in this specification

(54) **Anti-blocking agents and compositions for synthetic resin films.**

(30) Priority: **31.07.87 JP 190514/87**

(43) Date of publication of application:
**01.02.89 Bulletin 89/05**

(45) Publication of the grant of the patent:
**19.04.95 Bulletin 95/16**

(84) Designated Contracting States:
**DE FR GB**

(56) References cited:
**EP-A- 0 142 773**
**EP-A- 0 248 492**
**FR-A- 2 532 652**

(73) Proprietor: **KYOWA CHEMICAL INDUSTRY CO., LTD.**
**305, Yashimanishi-machi**
**Takamatsu-shi**
**Kagawa-ken (JP)**

(72) Inventor: **Miyata, Shigeo**
**251-1, Yashimanishimachi**
**Takamatsu-shi**
**Kagawa-ken (JP)**
Inventor: **Oishi, Shunzi**
**2656-3, Ohtashimomachi**
**Takamatsu-shi**
**Kagawa-ken (JP)**

(74) Representative: **Kraus, Walter, Dr. et al**
**Patentanwälte Kraus, Weisert & Partner**
**Thomas-Wimmer-Ring 15**
**D-80539 München (DE)**

## Description

The present invention relates to an anti-blocking agent useful for prevention of blocking of synthetic resin films and to a synthetic resin film molding resin composition containing the said anti-blocking agent.

More particularly, the present invention relates to an anti-blocking agent for synthetic resin films comprising nearly spherical secondary particles of hydrotalcites having an average secondary particle diameter falling in the range of 1 to 8 $\mu$m, said hydrotalcites being represented by the following formula (1)

$$M_{1-x}^{2+}Al_x(OH)_2A_{x/n}^{n-} \cdot mH_2O \quad \cdots \cdots (1)$$

in which $M^{2+}$ stands for $Mg^{2+}$ or $Mg^{2+}$ and $Zn^{2+}$, $A^{n-}$ stands for an anion of n valence, and x and m stand each for a positive number satisfying the following formula:

$0.2{\leqq}x{<}0.5$, $0{\leqq}m{<}1$.

The present invention relates also to a synthetic resin film molding resin composition, and more preferably, an olefinic synthetic resin film molding resin composition, containing the said anti-blocking agent.

Heretofore, it is generally known in thermoplastic synthetic resin films, for instance, olefinic synthetic resin films, such as polyolefin film, that partly caused by containing, more or less, usually containing some of low molecular weight and low melting polymers, when the film is superposed one upon another, trouble of so-called "blocking" tends to occur with mutually contacting film surfaces sticking to each other. This blocking phenomenon, during the film formation of olefinic synthetic resins and further in a higher order of their processing step, for instance, brings about an inconvenience of causing a lowering or working efficiency or trouble of no good opening of bags in the case of packaging or packing by the use of film formed.

Consequently, heretofore, various proposals have been made to prevent the blocking of the synthetic resin film. Of such proposals, there are known proposals of the type of causing a lowering of a coefficient of kinetic friction in the synthetic resin film surface by incorporating powdered inorganic fillers or proposals of the type of incorporating lubricants.

Japanese Laid-open Patent Application (Japanese Kokai) No. 210961/84, for instance, proposes an anti-blocking film molding resin composition obtained by adding 300 to 5000 ppm of an inorganic filler to a resin composition comprising 80 to 99 weight % of an ethylenealpha-olefin copolymer and 1 to 20 weight % of a polypropylene type resin with a density of 0.890 to 0.945 g/cm$^3$. As the inorganic filler there are cited silica type anti-blocking agents, such as silica, diatomaceous earth, clay, talc, zeolite and the like, and further, usual anti-blocking agents, such as calcium carbonate, titanium oxide, zinc oxide and the like, and particularly silica type anti-blocking agents containing silicon atoms are mentioned as effective.

Further, Japanese Laid-Open Patent Application No. 32836/85 proposes an anti-blocking agent comprising anhydrous amorphous aluminosilicates being acid and heat treated products of zeolites being substantially provided with particulate condition of zeolites. As still another proposal, Japanese Laid-Open Patent Application No. 68852/87 discloses that a polyimide film containing 0.1 to 0.5 weight %, based on the weight of the film resin, of an inorganic powder based on the powder having a particle diameter of 1 to 5 $\mu$m becomes a film being improved in film traveling and adhesion, and as the inorganic powder the use of an ortho-phosphate compounds of Group IIa alkaline earth metals, such as anhydrous calcium secondary phosphate and calcium pyrophosphate, is recommended.

Furthermore, Japanese Patent Publication No. 24275/69 discloses a process for the production of an anti-blocking highly-stabilized polyethylene film, and there is disclosed the use of an anti-blocking agent containing, as solid particle material, 99% or more of SiO$_2$ having an average particle diameter of 5 microns or less. Moreover, Japanese Patent Publication No. 8835/65 discloses techniques of incorporating a specified fatty acid amide containing erucic acid residues in the molecule for imparting improved blocking property and slidability to polyolefin films.

Including these conventional proposals, however, the use of hydrotalcites as the anti-blocking agent for synthetic resin films remained heretofore unknown as far as the instant inventors know. Moreover, including the said conventional proposals, blocking resistance of the synthetic resin film is usually improved with increases in the amount of the anti-blocking agent incorporated, but it entails a technical problem that

2

transparency of the film deteriorates on the contrary. In other words, for the reason that the blocking resistance and transparency are in a mutually-hardly-compatible inverse correlation, it is virtually extremely difficult to achieve satisfactory results in both properties. What is more, the use of conventional anti-blocking agents represented by silica, as is noticed from Mohs' hardness of silica being about 7, entailed technical problems remaining unresolved even in the respect that because of its high hardness, working machines were often inconveniently abraded.

The instant inventors studied to develop an anti-blocking agent for synthetic resin films capable of overcoming the said technical problems.

As a result, they found that nearly spherical secondary particles of hydrotalcites having an average secondary particle diameter falling in the range of 1 to 8 $\mu$m, said hydrotalcites satisfying the specified composition represented by the said formula (1), becomes an anti-blocking agent being extremely useful for markedly improving the blocking resistance of the synthetic resin film without adversely affecting the transparency of the film and further for providing a synthetic resin film having a combination of heretofore-hardly-compatible superior blocking resistance and transparency without inconveniently abrading working machines.

Further, hydrotalcites satisfying the specified composition represented by the said formula (1) have, in themselves, a plate-like crystal structure being nearly hexagonal in external form and are expected to be unsuitable hexagonal plate-like shaped bodies from a view-point of causing in film surface fine projections of the order of about 0.5 to several $\mu$m which are considered as serving to impart blocking resistance to the resin film, but it was, nevertheless, found that in a form of secondary particles having an average secondary particle diameter of 1 to 8 $\mu$m used in the present invention, it is made possible to disperse into the resin in good condition and to impart superior blocking resistance to the resin film without causing deterioration in transparency of the film, although it is presumed that this is because of formation of the nearly spherical secondary particles with intense coagulation of hydrotalcites satisfying the specified composition of the formula (1).

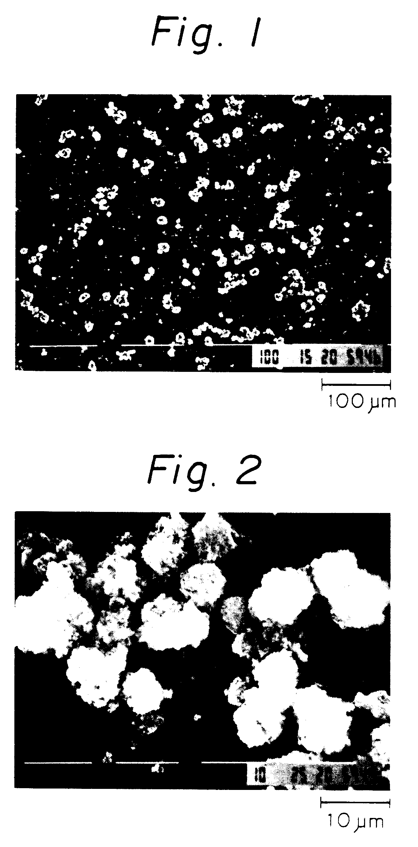

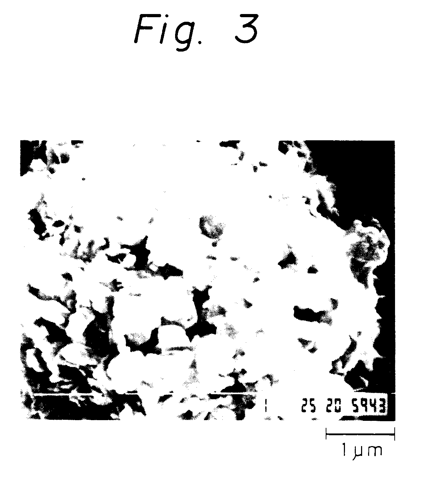

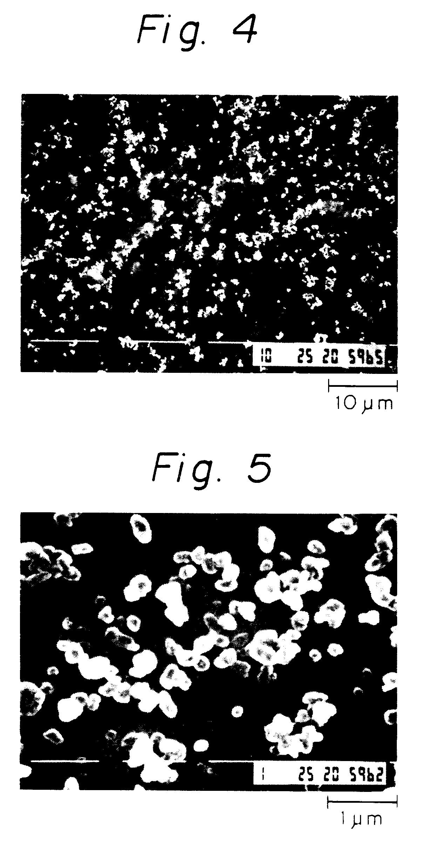

The accompanying Fig. 1 to Fig. 3 are respectively scanning electron microscopic photographs with magnifications of 100X, 1,000X and 10,000X of secondary particles of hydrotalcites used in the present invention, and the accompanying Fig. 4 and Fig. 5 are respectively scanning electron microscopic photographs with magnifications of 1,000X and 10,000X of primary particles of the hydrotalcites.

Consequently, the object of the present invention is to provide an anti-blocking agent for synthetic resin films.

The other object of the present invention is to provide a synthetic resin film molding resin composition and preferably an olefinic synthetic resin film molding resin composition.

The anti-blocking agent of the present invention comprises nearly spherical secondary particles of hydrotalcites having an average secondary particle diameter falling in the range of 1 to 8 $\mu$m, said hydrotalcites being represented by the following formula (1)

$$M^{2+}_{1-x}Al_x(OH)_2A^{n-}_{x/n} \cdot mH_2O \qquad \cdots \cdots (1)$$

in which $M^{2+}$ stands for $Mg^{2+}$ or $Mg^{2+}$ and $Zn^{2+}$, $A^{n-}$ stands for an anion of n valence, and x and m stand each for a positive number satisfying the following formula:

$0.2 \leq x < 0.5$, $0 \leq m < 1$.

In the present invention nearly spherical secondary particles of hydrotalcites having an average particle diameter of 1 to 8 $\mu$m, said hydrotalcites satisfying the specified composition represented by the said formula (1), are indispensable for the use of anti-blocking agents for synthetic resin films. In this connection, by the term "film" used in the present invention is included a sheet-like structure in a wide sense, such as tape, ribbon, film, sheet and the like.

As the nearly spherical secondary particles it is desirable to select secondary particles being in coagulated condition as close to sphere as possible with intense coagulation of primary particle crystals of hydrotalcites represented by the formula (1), and their average secondary particle diameter is 1 to 8 $\mu$m, preferably 2 to 6 $\mu$m and more preferably 3 to 6 $\mu$m. When the average secondary particle diameter is too small, falling off from the said average secondary particle diameter range, they are weak at capability of imparting the blocking resistance to the synthetic resin film, whereas when it is too great, their no good dispersion in the synthetic resin is caused and appearance, mechanical strength and the like of the film are

3

deteriorated and because of this, it is preferred to optionally select within the said limits.

Further, the secondary particles should preferably have a narrow secondary particle diameter distribution width, and secondary particles falling in the range of 1/2 to 3/2 the average secondary particle diameter (r) (1/2r to 3/2r) should favorably account for 50 % or more, more preferably 60 % or more, of the whole particles. If the secondary particle diameter distribution width is too broad, the capability to impart the blocking resistance to the synthetic resin film tends to deteriorate and because of this, it is preferred to optionally select within the above-illustrated limits.

Moreover, the secondary particles of hydrotalcites of the formula (1) should preferably have a BET specific surface area of 50 $m^2/g$ or less, more preferably 30 $m^2/g$ or less and most preferably 20 $m^2/g$ or less. When the BET specific surface area is too great, they are poor in campatibility with the resin and further coagulate in the resin for formation of coarse particles, entailing the fear of adversely affecting the appearance of transparency of the resin film, so it is preferred to select as small a BET specific surface area as possible in the above-illustrated region. In the case, further, where the BET specific surface area is too great, hydrotalcites tend to hold a lot of adsorption water, entailing the fear of generating flash patterns being inconvenient to the film.

Furthermore, secondary particles of hydrotalcites of the formula (1) of the present invention with Mohs' hardness of the order of about 2 can readily be selected over heretofore-frequently-used silica type anti-blocking agents with Mohs' hardness of the order of about 7 and because of this, trouble of abrading working machines can be avoided and moreover, they usually show a refractive index of the order of 1.46 to 1.55, and those having the refractive index of the order of preferably 1.48 to 1.55 and more preferably 1.49 to 1.54, can readily be selected and because of this, they are also provided with the advantage of being capable of use without adversely affecting at all the transparency of resins having refractive indices falling in such a range, such as olefinic resins, (meth)acrylic resins, vinyl chloride type resins, polyvinyl alcoholic resins and the like.

It is indispensable that the anti-blocking agent for synthetic resin films of the present invention should, as mentioned above, comprise nearly spherical secondary particles of hydrotalcites having an average secondary particle diameter of 1 to 8 $\mu m$, preferably 2 to 6 $\mu m$ and more preferably 3 to 6 $\mu m$, said hydrotalcites satisfying the specified composition represented by the said formula (1), and what is more, preferably they should have a secondary particle diameter distribution width that secondary particles falling in the range of 1/2 to 3/2 the average secondary particle diameter (r) account for 50 % or more, more preferably 60 or more, or the whole particles. Further, they should preferably have a BET specific surface area of 50 $m^2/g$ or less, more preferably 30 $m^2/g$ or less and most preferably 20 $m^2/g$ or less. What is more, they should preferably have a refractive index of 1.46 to 1.57, more preferably 1.48 to 1.55 and most preferably 1.49 to 1.54, and they should preferably show Mohs' hardness of the order of about 2.

In hydrotalcites represented by the said formula (1) of which the anti-blocking agent for synthetic resin films of the present invention is made up, $M^{2+}$ in the formula is $Mg^{2+}$ or a solid solution of $Mg^{2+}$ and $Zn^{2+}$. Further, in the formula (1), anion $A^{n-}$ of n valence can optionally be selected, but as preferred examples of anion $A^{n-}$ there can be cited, for instance, $OH^-$, $NO_3^-$, $ClO_4^-$, $CH_3COO^-$, $C_6H_4(OH)COO^-$, $CO_3^{2-}$, $SO_3^{2-}$ $HPO_4^{2-}$, $(COO)_2^{2-}$, $PO_4^{3-}$ and the like.

Further, in hydrotalcites represented by the said formula (1), x is a positive number of $0.2<x\leq0.5$, preferably $0.2<x<0.4$, and m is $0\leq m<1$. In the case where the anti-blocking agent for synthetic resin films of the present invention is used in synthetic resins having relatively high fabrication temperatures, it is preferred to select hydrotalcites represented by the formula (1) wherein m value is smaller, and in the case where particularly higher fabrication temperatures are desired, it is preferred to select de-crystal-water-treated hydrotalcites of the formula (1) having m = 0 or close to it. The de-crystal-water-treatment can be effected by means known per se, and it can readily be effected, for instance, in a mode of heat treating for 1 to 40 hours at a temperature of 150 ° to 300 °C in air or in a gas atmosphere, such as $N_2$, He, $O_2$, $H_2$ and $CO_2$. If desired, heat treatment under reduced pressure conditions can also be employed.

In the present invention secondary particles of hydrotalcites of the formula (1) can be surface-treated with surface-treating agents in order to further improve compatibility with, and dispersibity in, resins and to serve to improve various effects with the anti-blocking agent of the present invention.

As examples of such surface-treating agents there can be illustrated higher fatty acids, anionic surface-active agents, silane type coupling agents, titanate type coupling agents, esters of glycerins and fatty acids and the like. As specific examples of such surface-active agents there can be illustrated higher fatty acids, such as stearic acid, oleic acid and lauric acid; anionic surface-active agents, such as sodium stearate, sodium oleate and sodium benzenesulfonate laurate; silane type or titanate type coupling agents, such as vinyltriethoxysilane, gammamethacryloxypropyltriethoxysilane, isopropyltriisostearoyl titanate and isopropyltridecylbenzenesulfonyl titantate; glycerin-fatty acid esters, such as glycerin monostearate and glycerin

4

EP 0 301 509 B1

monooleate.

For the surface treatment of nearly spherical secondary particles of hydrotalcites of the formula (1) with surface-treating agents, in the case, for instance, where the surface-treating agent is, in itself, liquid, or in the case, for instance, where it is made liquid by dissolving in water, alcohols and the like, it can be carried out by mechanically mixing these liquid surface-treating agents with powdered secondary particles of hydrotalcites of the formula (1) or their aqueous suspensions under heating conditions or under non-heating conditions, and in the case, for instance, where the surface-treating agent is fused at heating conditions, it can also be carried out by mechanically mixing with powdered secondary particles of hydrotalcites of the formula (1) at heat-melting conditions.

After their thorough mixing, the mixture is optionally subjected to means selected, for instance, from washing with water, dehydration or dry pulverization, classification and whereby surface-treated products of secondary particles of hydrotalcites of the formula (1) can be obtained.

The content of the surface-treating agent in the surface-treated products of secondary particles of hydrotalcites of the formula (1) which can be obtained as the above can suitably be selected and altered, and there can be illustrated such a content as 0.1 to 10 weight % based on the weight of secondary particles of hydrotalcites of the formula (1). Hydrotalcites, starting materials for the anti-blocking agent of the present invention can be prepared by following methods known per se, such as known methods of Japanese Patent Publication Nos. 2280/71 (Japanese Patent Application No. 48349/66), 32198/72 (Japanese Patent Application No. 99358/69), 30039/75 (Japanese Patent Application No. 45658/67), 29477/73 (Japanese Patent Application No. 120778/70) and 29129/76 (Japanese Patent Application No. 123553/70), and Japanese Laid-Open Application No. 174270/86 (Japanese Patent Application No. 13504/85) filed by the same applicant. Further, hydrotalcite type compounds having a BET specific surface area of about 50 $m^2$/g or less, preferably 30 $m^2$/g or less and more preferably 20 $m^2$/g or less, and an average secondary particle diameter of 1 to 8 $\mu$m, preferably 2 to 6 $\mu$m and more preferably 3 to 6 $\mu$m, can favorably be obtained by further heat treating in aqueous media, for instance, hydrotalcites of the formula (1) prepared as the above. In this favorable mode, hydrotalcites of the formula (1) obtained by the above-illustrated method are batch-wise heat treated or continuously heated treated (unheated products are continuously autoclaved and their heat treated products are continuously taken out) at such conditions as temperatures of 120 to 250°C and 1 to 40 hours in aqueous media in autoclave, for instance, whereby they can be obtained as hydrotalcites of the formula (1) adjusted to the desired BET specific surface area and average secondary particle diameter.

In the said heat treatment, the BET specific surface area and secondary particle diameter go smaller as the temperature goes higher and as the heating time is prolonged. It is also possible to employ treatment conditions being in excess of 250°C, but no specific merits are gained whereby, so it is favorable to employ the temperature of the order of the above-illustrated limits.

The refractive index of hydrotalcites of the formula (1), within the limits of 1.46-1.57, tends to go greater as x corresponding to the Al content goes greater, or as the Zn content in $M^{2+}$ in the formula (1) increases, and there can readily be selected a refractive index coming very close, or identical with, that of resins, such as olefinic resins, (meth)acrylic resins, vinyl chloride type resins, polyvinyl alcoholic resins and the like.

The anti-blocking agent for synthetic resin films of the present invention is useful for use of anti-blocking agents for synthetic resin films, preferably thermoplastic synthetic resin films.

As examples of such synthetic resins there can be cited olefinic resins represented by polymers or copolymers comprising one member or a plurality of members of $C_2$-$C_{12}$ alpha-olefins, such as ultra-low density straight chain polyethylene (VLLDPE), low density straight chain polyethylene (LLDPE), low density polyethylene (LDPE), medium density polyethylene (MDPE), high density polyethylene (HDPE), polypropylene, ethylene/propylene and/or diene random or block copolymers, poly(4-methylpentene-1) and polybutene-1; (meth)acrylic resins represented by polymers of copolymers derived from major component amounts of acrylic and/or methacrylic acid esters, such as polyacrylate ester, polymethacrylate ester, acrylate and methacrylate ester copolymers; vinyl chloride type resins represented by polymers or copolymers derived from major component amounts of polyvinyl chloride, polyvinylidene chloride, vinyl chloride or vinylidene, and copolymerizable monomers; polyvinyl alcoholic resins represented by polymers or copolymers derived from polyvinyl alcohol and major component amounts of polyvinyl alcohol and copolymerizable monomers; ethylene/vinyl acetate copolymers (EVA); ethylene/ethyl acrylate copolymers (EEA); polyester resins, such as polyethylene terephthalate and polybutylene terephthalate; polyamide resins, such as nylon 6, nylon-66 and the like; polyimide resins; styrene monomer homopolymers or copolymers with monomers, such as acrylonitrile, butadiene and methyl methacrylate.

The anti-blocking agent for synthetic resin films of the present invention is particularly favorable in use for olefinic synthetic resin films and imparts superior transparency to the films. It is due to the fact that refractive indices of the both come close to each other and due to the nucleating effect of hydrotalcites.

5

A small amount is sufficient for the amount of the anti-blocking agent for synthetic resin films of the present invention used and it may optionally be selected, and 0.01 to 2 parts by weight per 100 parts by weight of the synthetic resin can be illustrated as a preferable amount of it used. More preferably, it is 0.05 to 1 part by weight and most preferably 0.1 to 0.5 part by weight. When the amount of the anti-blocking agent for synthetic resin films of the present invention used is too small, falling off from the said limits, the intended blocking resistance of the present invention cannot sufficiently be obtained, and when it is too great, on the contrary, its effect is not improved any further in blocking resistance. Not only that, but it also entails a fear of causing a lowering of mechanical strength of the film, and it sometimes deteriorates transparency according to the kind of the resin, so it is preferred to select within the limits of said use amounts.

The anti-blocking agent for synthetic resin films of the present invention, when used in conjunction with known lubricants, produces synergistic effect in improvement of blocking resistance, and their joint use is favorable. As examples of such lubricants there can be cited fatty acid amide type lubricants, such as stearylamide, palmitylamide, oleylamide, methylenebisstearoamide and ethylenebisstearoamide; hydrocarbon type lubricants, such as liquid paraffin, paraffin wax, micro wax and low polymerized polyethylene; fatty acid type lubricants, such as myristic acid, palmitic acid, stearic acid, arachidic acid and behenic acid; ester type lubricants, such as ethylene glycol monostearate, esterwax, glyceride, butyl stearate and hardened castor oil; alcoholic lubricants, such as cetyl alcohol and stearyl alcohol; metal soap type lubricants, such as calcium stearate, zinc stearate. Among the said lubricants fatty acid amide type lubricants can favorably be used for systems of olefinic synthetic resins and anti-blocking agents comprising secondary particles of hydrotalcites represented by the formula (1) of the present invention.

As amounts of the said lubricants used there can be illustrated use amounts of preferably 0.01 to 1 part by weight, and more preferably 0.05 to 0.5 part by weight, per 100 parts by weight of synthetic resins.

The present invention can provide a synthetic resin film molding resin composition characterized by containing 10 parts by weight of the above-illustrated synthetic resin and 0.01 to 2 parts by weight of an anti-blocking agent comprising nearly spherical secondary particles of hydrotalcites having an average secondary particle diameter falling in the range of 1 to 8 $\mu$m, said hydrotalcites being represented by the said formula (1).

Further, in one favorable mode of the present invention, there can be provided an olefinic synthetic resin film molding resin composition characterized by containing

(a) 100 parts by weight of an olefinic synthetic resin and

(b) 0.01 to 2 parts by weight of an anti-blocking agent comprising nearly spherical secondary particles of hydrotalcites having an average secondary particle diameter falling in the range of 1 to 8 $\mu$m, said hydrotalcites being represented by the following formula (1)

$$M^{2+}_{1-x}Al_x(OH)_2A^{n-}_{x/n} \cdot mH_2O \quad \cdots\cdots (1)$$

in which $M^{2+}$ stands for $Mg^{2+}$ or $Mg^{2+}$ and $Zn^{2+}$, $A^{n-}$ stands for an anion of n valence, and x and m stand each for a positive number satisfying the following formula:

$0.2 \leq x < 0.5$, $0 \leq m < 1$.

The synthetic resin film molding resin composition of the present invention can be prepared by mixing the synthetic resin, the anti-blocking agent of the present invention, further the lubricant and other desired additives. Mixing means may optionally be selected, and there can be illustrated known mixing means, such as ribbon blender, high speed mixer, kneader, Banbury mixer, extruder and it is favorable to effect in such a manner as to mix into the synthetic resin as uniformly as possible the anti-blocking agent of the present invention and further, other additives. The resin composition obtained can be molded into a synthetic resin film having superior blocking resistance by making the film using known customary film-forming methods, such as T-die technique, inflation technique and biaxial stretching technique. Preparative methods and mixing conditions for such resin compositions and further, film-forming techniques and filming-molding conditions and the like are well known and can be utilized in the present invention.

The anti-blocking synthetic resin film molding resin composition of the present invention may contain other various additives conventionally used in synthetic resin film molding resin compositions in addition to the anti-blocking agent comprising secondary particles of hydrotalcites having an average secondary particle diameter falling in the range of 1 to 8 $\mu$m, said hydrotalcites being represented by the said formula (1), and further, said illustrated lubricants.

As examples of such other additives there can be cited antioxidants, such as 2,6-di-tert-butyl-p-cresol, 2,5-di-tert-butylhydroquinone, 2,2'-methylene-bis(4-methyl-6-tert-butylphenol), tetrakis(2,4-di-tert-butylphenyl), 4,4'-bisphenylenediphosphonite, 4,4'-thiobis-(6-tert-butylphenol), 4,4'-thiobis-(6-tert-butyl-m-cresol) and octadecyl-3-(3',5'-di-tert-butyl-4'-hydroxyphenol)-propionate; ultraviolet absorbers, such as 2-hydroxy-4-octoxybenzophenone, 2(2'-hydroxy-5-methylphenyl)benzotriazole and ethyl-2-cyano-3,3-diphenyl acrylate; antistatic agents, such as polyethylene oxide, carbowax, pentaerythritol monostearate, sorbitan monopalmitate and sulphated oleic acid; color formers, such as carbon black, phthalocyanine, quinacridone, indoline, azo type pigments, titanium oxide, iron oxide red, chrome yellow, iron oxide yellow and mineral violet; impact strength modifiers, such as MBS, ABS, polyethylene chloride, acrylic polymer, fibrous magnesium hydroxide and fibrous hydrotalcites.

Amounts of such additives mixed may optionally be selected, and there can be illustrated, for instance, such composition amounts as 0.01 to 1 % antioxidants; 0.01 to 1 % ultraviolet absorbers, 0.01 to 1 % antistatic agents, 0.1 to 5 % color formers and 1 to 20 % impact strength modifiers on the basis of the weight of the synthetic resin.

Further, in the present invention values obtained by following the hereinbelow-described measurement and determination methods are meant by (a) average secondary particle diameter, (b) BET specific surface area of secondary particles and (c) refractive index of secondary particles.

(a) Average secondary particle diameter of nearly spherical secondary particles

Measured and determined using MICROTRAC particle size analyser SPA type [made by LEEDS & NORTHRUP INSTRUMENTS company].

700 mg of sample powder is added to 70 ml of water and subjected to super-sonic (MODEL US-300, current 300 μA, made by NISSEI company) dispersion treatment for 3 minutes. After that, 2-4 ml of the aqueous dispersion is taken and added in a sample chamber of the said particle size analyser in which 250 ml of degassed water is received, and the solution is recycled for 8 minutes by operating the analyser and then its particle size distribution is measured. It is measured twice in all and an arithmetic average value of 50% cumulative secondary particle diameters obtained in the respective measurements is figured out to set as average secondary particle diameter of the sample.

(b) BET specific surface area of secondary particles

Measured by the liquid nitrogen adsorption method.

(c) Refractive index of secondary particles

Measured according to Larsen's oil immersion method, using Abbe's refractometer.

Further, several modes of the present invention will be explained in more detail hereinunder and in the following examples (d) blocking resistance, (e) transparency and (f) haze are tested and evaluated as follows.

(d) Blocking resistance

Film cut in a rectangle 50 mm wide x 100 mm long is superposed one upon another in area of 50 mm x 50 mm = 25 cm$^2$ and a load of 10 kg is placed on the overlapping part, it is left alone at 40°C for 24 hours in an oven and measured for its peeling strength by tensile tester.

(e) Transparency (total light transmittance)

Using a digital color-meter, parallel light is applied to film, and it is represented by a ratio, in a percentage, of light quantity passed through the film to incident light quantity.

(f) Haze

Measured according to the procedure of ASTM D-100-61.

Examples

[Production example (A) of nearly spherical hydrotalcite type anti-blocking agent]

40 ℓ of an aqueous solution of a mixture of aluminum chloride and magnesium chloride ($Al^{3+}$ = 0.2M/ℓ and $Mg^{2+}$ = 0.4M/ℓ) being adjusted to about 30°C was charged in a stainless steel cylindrical reactor and stirred by means of stirrer. About 12ℓ of an aqueous solution of 4M/ℓ of sodium hydroxide adjusted to about 30°C was added to this solution and when the pH of the reaction solution increased to about 10, the pouring of sodium hydroxide was stopped.

The reaction solution containing chloride ion form hydrotalcites so obtained was dehydrated and washed with about 40ℓ of an aqueous solution of 0.2 M/ℓ of sodium carbonate at about 30°C to exchange chloride ion of hydrotalcites for carbonate ion by ion exchange. This carbonate ion form hydrotalcites were suspended in water to make a total amount of 60ℓ.

10ℓ of this suspension was charged into an autoclave with a capacity of 20ℓ and treated at 150°C for 10 hours. (Sample A)

Separately, in like manner as in the above case 10ℓ of a suspension of hydrotalcites was put in an autoclave with a capacity of 20ℓ, treated at 150°C for 10 hours, then successively the suspension of hydrotalcites was continuously fed into the autoclave held at 150°C at a rate of 5ℓ/hour and it was continuously discharged in the same amount as the feed amount.

Effluents were collected in portions for every 2 hours and samples taken during the periods of 0-2, 2-4, 4-6 and 6-8 hours after their discharge was begun were designated respectively samples B, C, D and E. They were chemically analyzed, in consequence of which they were found to be represented by a composition formula $Mg_4 Al_2 (OH)_{12} CO_3 \cdot 3H_2 O$.

Samples A, B, C, D and E were each contacted with aqueous sodium stearate solution with stirring at about 80°C for about 20 minutes and about 3 weight % of stearate ion was coated on the surfaces of secondary particles of hydrotalcites. After that, they were dehydrated, dried and pulverized to measure their BET specific surface area and refractive index. Their average secondary particle diameter, however, was measured on samples before surface treatment.

| Sample | Average secondary particle diameter ($\mu$m) | BET specific surface area (m$^2$/g) | Refractive index |
|--------|----------------------------------------------|-------------------------------------|------------------|
| A | 0.91 | 15 | 1.52 |
| B | 2.3 | 7 | " |
| C | 3.8 | 12 | " |
| D | 4.9 | 17 | " |
| E | 8.9 | 21 | " |

Examples 1-6, Comparative Examples 1-6

Low density polyethylene (refractive index 1.51) pellets were mixed, in composition ratios indicated in Table 1, with anti-blocking agents comprising nearly spherical hydrotalcites (Examples 1-3, 5, 6, Comparative Examples 5, 6) or silica (tradename SYLOID-66, average secondary particle diameter 4.1 $\mu$m) (Comparative Examples 1-3) or combination of nearly spherical hydrotalcites and stearic acid amide (Example 4) or combination of silica and stearic acid amide (Comparative Example 4), then melted and kneaded at about 180°C in an extruder and pellets were made. Using these pellets 40 $\mu$m thick and 100 $\mu$m thick films were made at about 200°C. Using the 40 $\mu$m thick film its blocking property, coefficient of static friction, haze, tensile strength at break and elongation were measured, and using the 100 $\mu$m thick film, its total light transmittance was measured. The results were shown in Table 1.

As the result, the anti-blocking agent comprising nearly spherical secondary particles of hydrotalcites is excellent in anti-blocking effect when used singly over silica being a typical anti-blocking agent. Not only that, but transparency of the film as is represented by haze and total light transmittance also is markedly improved, and mechanical strengths of tensile strength and elongation as well as improved. In the case, further, of using in conjunction with lubricants, such as stearic acid amide, superiority of the hydrotalcites over silica is found to be further improved.

Table 1  Blocking property of low density polyethylene film

| Example (Ex.) or Comparative Example (Comp. Ex.) | Ex. 1 | Ex. 2 | Ex. 3 | Comp. Ex. 1 | Comp. Ex. 2 |
|---|---|---|---|---|---|
| Anti-blocking agent, mixed amount (part by weight) (per 100 parts by weight of resin) Hydrotalcites | 0.1 | 0.3 | 0.5 | – | – |
| Average secondary particle diameter ($\mu$m)  [NOTE] | 3.8[C] | 3.8[C] | 3.8[C] | | |
| Silica (SYLOID66) | – | – | – | 0.1 | 0.3 |
| Average secondary particle diameter ($\mu$m) | | | | 4.1 | 4.1 |
| Stearic acid amide (part by weight) | – | – | – | – | – |
| Blocking property (g/cm$^2$) | 54 | 48 | 49 | 56 | 52 |
| Coefficient of static friction | 0.95 | 0.74 | 0.64 | 0.97 | 0.59 |
| Haze (%) | 6.2 | 6.5 | 7.3 | 7.7 | 8.8 |
| Total light transmittance (%) | 87.1 | 86.4 | 85.9 | 85.3 | 83.8 |
| Tensile strength at break (kg/cm$^2$) | 172 | 177 | 168 | 165 | 163 |
| Tensile elongation (%) | 598 | 590 | 521 | 582 | 582 |

NOTE:  Sample symbol for sample obtained in production example A.

– to be continued –

9

Table 1 (continued)

| Example (Ex.) or Comparative Example (Comp. Ex.) | Comp. Ex. 3 | Ex. 4 | Comp. Ex. 4 | Control 1 |
|---|---|---|---|---|
| Anti-blocking agent, mixed amount (part by weight) (per 100 parts by weight of resin) Hydrotalcites | – | 0.3 | – | – |
| Average secondary particle diameter (μm) [NOTE] | | 3.8[C] | | |
| Silica (SYLOID66) | 0.5 | – | 0.3 | – |
| Average secondary particle diameter (μm) | 4.1 | | 4.1 | |
| Stearic acid amide (part by weight) | – | 0.1 | 0.1 | – |
| Blocking property (g/cm$^2$) | 50 | 19 | 36 | 72 |
| Coefficient of static friction | 0.55 | 0.30 | –0.37 | >1.0 (1.0 or more incapable measurement) |
| Haze (%) | 11.3 | 7.5 | 8.9 | 7.6 |
| Total light transmittance (%) | 81.2 | 86.5 | 83.8 | 86.3 |
| Tensile strength at break (kg/cm$^2$) | 163 | 173 | 164 | 176 |
| Tensile elongation (%) | 552 | 575 | 536 | 590 |

– to be continued –

Table 1 (continued)

| Example (Ex.) or Comparative Example (Comp. Ex.) | Ex. 5 | Ex. 6 | Comp. Ex. 5 | Comp. Ex. 6 |
|---|---|---|---|---|
| Anti-blocking agent, mixed amount (part by weight) (per 100 parts by weight of resin) Hydrotalcites | 0.3 | 0.3 | 0.3 | 0.3 |
| Average secondary particle diameter ($\mu$m) [NOTE] | 2.3[B] | 4.9[D] | 0.91[A] | 8.9[E] |
| Silica (SYLOID66) | - | - | - | - |
| Average secondary particle diameter ($\mu$m) | | | | |
| Stearic acid amide (part by weight) | - | - | - | - |
| Blocking property (g/cm$^2$) | 47 | 50 | 69 | 50 |
| Coefficient of static friction | 0.90 | 0.74 | >1.0 | 0.78 |
| Haze (%) | 6.7 | 7.2 | 6.6 | 7.7 |
| Total light transmittance (%) | 86.1 | 86.8 | 86.5 | 85.7 |
| Tensile strength at break (kg/cm$^2$) | 176 | 171 | 174 | 172 |
| Tensile elongation (%) | 582 | 567 | 590 | 582 |

[Production example (B) of nearly spherical hydrotalcite anti-blocking agent]

Three (3) mols, per kg of hydrotalcites, of aqueous 0.5 M/$\ell$ of phosphoric acid ($H_3PO_4$) solution was added to the suspension of sample (C) before surface treatment, prepared in production example (A), thoroughly stirred, then sodium stearate corresponding to 30 g per kg of hydrotalcites was added and stirred for 30 minutes at about 60°C to effect surface treatment. As a result of chemical analysis, the composition of hydrotalcites formed was found to be represented by $Mg_4Al_2(OH)_{12}HPO_4 \cdot 2H_2O$. After surface treatment it was dehydrated, dried, pulverized and further treated at 250°C for 2 hours whereby a nearly total amount of crystal water was removed off.

This sample was 3.1 $\mu$m in average secondary particle diameter (before surface treatment), 16 m²/g in BET specific surface area and 1.50 in refractive index. (Sample F)

Example 7 and Comparative Example 7

Polypropylene (refractive index 1.49) pellets were mixed in composition ratios indicated in Table 2 respectively with hydrotalcites sample (F) and oleic acid amide (Example 7), and silica (tradename SYLOID-66, average secondary particle diameter 4.1 $\mu$m) and oleic acid amide (Comparative Example 7) as anti-blocking agents, then melted and kneaded at 230°C in an extruder for their pelletization. By T-die technique these] pellets were made into 40 $\mu$m thick and 100 $\mu$m thick films at about 230°C.

Using the 40 $\mu$m thick film, its blocking property, coefficient of static friction, haze, tensile strength at break and elongation were measured, and using the 100 $\mu$m thick film, its total light transmittance was measured. The results were shown in Table 2.

## Table 2  Blocking property of polypropylene film

| Example (Ex.) or Comparative Example (Comp. Ex.) | Unit | Ex. 7 | Comp. Ex. 7 | Control 2 |
|---|---|---|---|---|
| Anti-blocking agent | Parts by weight (per 100 parts by weight of resin) | | | |
|   Nearly Spherical Hydrotalcites | | 0.2 | – | – |
|   Silica (SYLOID66) | | – | 0.2 | – |
|   Oleic acid amide | | 0.1 | 0.1 | – |
| Blocking property | g/cm² | 16 | 34 | 70 |
| Coefficient of static friction | | 0.28 | 0.35 | 0.98 |
| Haze | % | 1.0 | 3.2 | 1.8 |
| Total light transmittance | % | 94.8 | 85.7 | 92.4 |
| Tensile strength at break | g/cm² | 590 | 515 | 550 |
| Tensile elongation | % | 440 | 370 | 400 |

## Claims

1. An anti-blocking agent for synthetic resin films comprising nearly spherical secondary particles of hydrotalcites having an average secondary particle diameter falling in the range of 1 to 8 $\mu$m, said hydrotalcites being represented by the following formula (1)

$$M^{2+}_{1-x}Al_x(OH)_2A^{n-}_{x/n} \cdot mH_2O \qquad \cdots (1)$$

in which $M^{2+}$ stands for $Mg^{2+}$ or a mixture of $Mg^{2+}$ and $Zn^{2+}$, $A^{n-}$ stands for an anion of n valence, and x and m stand each for a positive number satisfying the following formula:

$0.2 \leq x < 0.5$, $0 \leq m < 1$.

2.  The anti-blocking agent according to claim 1 in which the secondary particles of the hydrotalcites are 50 $m^2/g$ or less in BET specific surface area.

3.  The anti-blocking agent according to claim 1 in which the secondary particles of the hydrotalcites are 1.46 to 1.57 in refractive index.

4.  The anti-blocking agent according to claim 1 in which the average secondary particle diameter of the hydrotalcites falls in the range of 2 to 6 $\mu$m.

5.  An olefinic synthetic resin film molding resin composition containing
    (a) 100 parts by weight of an olefinic synthetic resin and
    (b) 0.01 to 2 parts by weight of an anti-blocking agent comprising nearly spherical secondary particles of hydrotalcites having an average secondary particle diameter falling in the range of 1 to 8 $\mu$m, said hydrotalcites being represented by the following formula (1)

$$M^{2+}_{1-x}Al_x(OH)_2A^{n-}_{x/n} \cdot mH_2O \qquad \cdots (1)$$

in which $M^{2+}$ stands for $Mg^{2+}$ or a mixture of $Mg^{2+}$ and $Zn^{2+}$, $A^{n-}$ stands for an anion of n valence, and x and m stand each for a positive number satisfying the following formula:

$0.2 \leq x < 0.5$, $0 \leq m < 1$.

6.  The composition according to claim 5 in which the olefinic synthetic resin film molding resin composition further contains
    (c) 0.01 to 1 part by weight of a fatty acid amide lubricant.

**Patentansprüche**

1.  Antihaftmittel für synthetische Harzfilme, dadurch **gekennzeichnet,** daß es fast sphärische sekundäre Teilchen aus Hydrotalciten mit einem durchschnittlichen sekundären Teilchendurchmesser im Bereich von 1 bis 8 $\mu$m enthält, wobei die Hydrotalcite durch die folgende Formel (1) dargestellt werden,

$$M^{2+}_{1-x}Al_x(OH)_2A^{n-}_{x/n} \cdot mH_2O \qquad (1)$$

worin $M^{2+}$ für $Mg^{2+}$ oder ein Gemisch aus $Mg^{2+}$ und $Zn^{2+}$ steht, $A^{n-}$ für ein Anion mit der Wertigkeit n steht und x und m je für eine positive Zahl stehen, die die folgende Gleichung erfüllt:

$0,2 \leq x < 0,5$, $0 \leq m < 1$.

2.  Antihaftmittel nach Anspruch 1, wobei die sekundären Teilchen der Hydrotalcite eine spezifische BET-Oberfläche von 50 $m^2/g$ oder weniger besitzen.

3.  Antihaftmittel nach Anspruch 1, wobei die sekundären Teilchen der Hydrotalcite einen Brechungsindex von 1,46 bis 1,57 besitzen.

**4.** Antihaftmittel nach Anspruch 1, wobei der durchschnittliche sekundäre Teilchendurchmesser der Hydrotalcite in den Bereich von 2 bis 6 $\mu$m fällt.

**5.** Filmverformungsharzmasse für einen Film aus einem olefinischen synthetischen Harz, die
(a) 100 Gew.-Teile olefinisches synthetisches Harz und
(b) 0,01 bis 2 Gew.-Teile eines Antihaftmittels, welches fast sphärische sekundäre Teilchen aus Hydrotalciten mit einem durchschnittlichen sekundären Teilchendurchmesser im Bereich von 1 bis 8 $\mu$m enthält, wobei die Hydrotalcite durch die folgende Formel (1) dargestellt werden,

$$M^{2+}_{1-x}Al_x(OH)_2A^{n-}_{x/n}\ mH_2O \qquad (1)$$

worin $M^{2+}$ für $Mg^{2+}$ oder ein Gemisch aus $Mg^{2+}$ und $Zn^{2+}$ steht, $A^{n-}$ für ein Anion mit der Wertigkeit n steht und x und m je für eine positive Zahl stehen, die die folgende Gleichung erfüllt:

$0,2{\leq}x{<}0,5, 0{\leq}m{<}1.$

**6.** Masse nach Anspruch 5, wobei die Formharzmasse für einen Film aus einem olefinischen synthetischen Harz zusätzlich
(c) 0,01 bis 1 Gew.-Teil eines Fettsäureamids als Schmiermittel enthält.

## Revendications

**1.** Agent anti-blocking pour films de résines synthétiques comprenant des particules secondaires pratiquement sphériques d'hydrotalcites ayant un diamètre moyen de particules secondaires compris entre 1 et 8 $\mu$m, lesdits hydrotalcites étant représentés par la formule suivante (1)

$M^{2+}_{1-x}Al_x(OH)_2 A^{n-}_{x/n} mH_2O \qquad (1)$

formule dans laquelle $M^{2+}$ représente $Mg^{2+}$ ou $Mg^{2+}$ et $Zn^{2+}$,
$A^{n-}$ représente un anion de valence n, et x et m représentent chacun un nombre positif répondant aux formules suivantes :

$0,2 \leq x < 0,5$ et $0 \leq m < 1.$

**2.** Agent anti-blocking selon la revendication 1 dans lequel les particules secondaires d'hydrotalcites ont une surface spécifique de 50 $m^2$/g ou moins.

**3.** Agent anti-blocking selon la revendication 1 dans lequel les particules secondaires d'hydrotalcites ont un indice de réfraction de 1,46 à 1,57.

**4.** Agent anti-blocking selon la revendication 1 dans lequel les particules secondaires des hydrotalcites ont un diamètre moyen compris dans l'intervalle allant de 2 à 6 $\mu$m.

**5.** Composition de résine de moulage pour film de résine oléfinique de synthèse contenant
(a) 100 parties en masse d'une résine oléfinique de synthèse et
(b) 0,01 à 2 parties en masse d'un agent anti-blocking comprenant des particules secondaires pratiquement sphériques d'hydrotalcites ayant un diamètre moyen de particules secondaires compris entre 1 et 8 $\mu$m, lesdits hydrotalcites étant représentés par la formule suivante (1)

$M^{2+}_{1-x}Al_x(OH)_2 A^{n-}_{x/n} mH_2O \qquad (1)$

formule dans laquelle $M^{2+}$ représente $Mg^{2+}$ ou $Mg^{2+}$ et $Zn^{2+}$,
$A^{n-}$ représente un anion de valence n, et x et m représentent chacun un nombre positif répondant aux formules suivantes :

$0,2 \leq x < 0,5$ et $0 \leq m < 1.$

14

6. Composition selon la revendication 5 dans laquelle la composition de moulage de résine pour film de résine oléfinique de synthèse contient en outre
(c) 0,01 à 1 partie en masse d'un lubrifiant amide d'acide gras.

## Fig. 1

100 μm

## Fig. 2

10 μm

Fig. 3

25 20 5943

1 μm

# Fig. 4

10 μm

# Fig. 5

1 μm